# EUROPÄISCHE PATENTSCHRIFT

(11) **EP 0 754 877 B1**
(45) Veröffentlichungstag und Bekanntmachung des Hinweises auf die Patenterteilung: **27.10.1999**
(21) Anmeldenummer: 96111596.1
(22) Anmeldetag: 17.07.1996
(51) Int. Cl.: F16F 13/16, F16F 1/38

(54) **Axial dämpfende Hydrobuchse**
Axially damped hydroelastic bush
Manchon à amortissement axial hydraulique

(30) Priorität: 21.07.1995 DE 19526750
(43) Veröffentlichungstag der Anmeldung: 22.01.1997
(73) Patentinhaber: Metzeler Gimetall AG, D-64744 Breuberg (DE)
(72) Erfinder: Badrinas, Joan, Martorell (ES); Gugsch, Mathias, Dipl.-Ing., 56587 Strassenhaus (DE); Hofmann, Manfred, Dipl.-Ing., 65597 Hünefelden (DE)
(74) Vertreter: Preissner, Nicolaus, Dipl.-Ing.

(56) Entgegenhaltungen:
- EP-A- 0 044 908
- EP-A- 0 528 253
- DE-A- 4 117 130
- FR-A- 1 345 846
- PATENT ABSTRACTS OF JAPAN vol. 017, no. 106 (M-1375), 4.März 1993 & JP-A-04 296237 (TOKAI RUBBER IND LTD), 20.Oktober 1992,
- PATENT ABSTRACTS OF JAPAN vol. 010, no. 029 (M-451), 5.Februar 1986 & JP-A-60 184741 (KURASHIKI KAKOU KK), 20.September 1985,
- PATENT ABSTRACTS OF JAPAN vol. 018, no. 059 (M-1552), 31.Januar 1994 & JP-A-05 280583 (KINUGAWA RUBBER IND CO LTD), 26.Oktober 1993,
- PATENT ABSTRACTS OF JAPAN vol. 009, no. 303 (M-434), 30.November 1985 & JP-A-60 139942 (NISSAN JIDOSHA KK), 24.Juli 1985,
- PATENT ABSTRACTS OF JAPAN vol. 013, no. 217 (M-828), 22.Mai 1989 & JP-A-01 035140 (TOYOTA MOTOR CORP;OTHERS: 01), 6.Februar 1989,

## Beschreibung

Die Erfindung betrifft eine axial dämpfende Hydrobuchse, insbesondere für die Fahrwerksaufhängung bei Kraftfahrzeugen.

Im Fahrwerksbereich eines Kraftfahrzeuges, besonders bei Vorderradachsaufhängungen mit Zug- oder Druckstrebe, ist zur Vermeidung von Lenkradunruhen eine Dämpfungswirkung in Richtung der Zug- oder Druckstrebenachse vorteilhaft. Die üblichen Bauteilgeometrien der Lenker bedingen somit ein elastisches Traglager in Buchsenform mit Dämpfungswirkung in axialer Richtung. Für diesen Einsatzfall sind axial dämpfende Hydrobuchsen bekannt, bei denen die Buchse axial in zwei Kammern unterteilt ist, welche bei axialen Relativbewegungen wechselseitig ihr Volumen verändern, wodurch die in den Kammern befindliche Hydraulikflüssigkeit über einen Überströmkanal zwischen den Kammern ausgetauscht wird. Hierbei werden die Kanalgeometrien derart gewählt, daß die Flüssigkeitsbewegung zu den gewünschten Dämpfungseffekten führt.

Bei derartigen Hydrobuchsen besteht der Zielkonflikt einen ausreichend großen radialen Freiweg zuzulassen und gleichzeitig eine gute Pumpwirkung zu erzielen, die unabhängig von einer radialen Auslenkung wirkt. Weiterhin ist zu beachten, daß die Gummimembrane, die die Kammern voneinander trennen, aus Gründen der Lebensdauer (Standzeit) nicht zugbeansprucht wird.

Das Dokument JP-A-60 139 942 beschreibt eine axial dämpfende Hydrobuchse gemäß den Merkmalen des Oberbegriffs des Anspruchs 1.

Ausgehend hiervon liegt der vorliegenden Erfindung die Aufgabe zugrunde, eine axial dämpfende Hydrobuchse vorzuschlagen, die einen ausreichend großen radialen Freiweg aufweist und gleichzeitig eine gute Pumpwirkung erzielt.

Zur Lösung dieser Aufgabe wird bei einer axial dämpfenden Hydrobuchse der eingangs genannten Art erfindungsgemäß vorgeschlagen, daß ein elastischer Tragkörper mit einer in Axialrichtung verlaufenden Zentralbohrung zur Aufnahme einer Tragstrebe vorgesehen ist, daß am Tragkörper mindestens zwei mit Hydraulikflüssigkeit gefüllte Flüssigkeitskammern vorgesehen sind, die belastungsabhängig ihr Volumen verändern und über einen Überströmkanal miteinander verbunden sind und daß die Füssigkeitskammer durch eine am Tragkörper ausgebildete Doppellippendichtung, die an einem stationären Widerlagerteil aufliegt, voneinander getrennt sind.

Bei der erfindungsgemäßen Hydrobuchse läßt die vorgesehene Doppellippendichtung einen radialen Freiweg von mehreren Millimetern zu, ohne daß die Dämpfungswirkung der Buchse beeinträchtigt ist. Weiterhin wird bei einfachen und somit kostengünstigen Aufbau eine gute Pumpwirkung erzielt. Durch die erfindungsgemäße Ausgestaltung mit einer am Tragkörper ausgebildeten Doppellippendichtung, die mit einem stationären Widerstandsteil zusammenwirkt, werden weiterhin Zugspannungen an der Doppellippendichtung vermieden, wodurch deren Lebensdauer erhöht ist.

Vorteilhafte Ausgestaltungen der Erfindung sind in den Unteransprüchen aufgeführt.

In weiterer Ausgestaltung der Erfindung wird vorgesehen, daß die Doppellippendichtung zwei radial abragende, beabstandete Dichtlippen aufweist, die an zugeordneten Auflageflächen des Widerlagerteils aufliegen.

Vorteilhaft weist das Widerlagerteil zueinander geneigte Auflageflächen für die Doppellippendichtung auf. Zweckmäßig besitzt das Widerlagerteil einen näherungsweise trapezförmigen Querschnitt. Dabei liegt der zwischen den gegenüberliegenden Auflageflächen vorliegende Winkel (α) zwischen 10 ° bis 80 °. Hierdurch wird die Dichtwirkung bei steigendem Kammerdurck erhöht, wobei die auf der schrägverlaufenden Auflagefläche anliegende Dichtlippe bei axialen Auslenkungen den Effekt der Volumenabnahme der druckbeaufschlagten Kammer unterstützt.

Vorteilhaft ist an dem Widerlagerteil der Überströmkanal eingebracht, der die Flüssigkeitskammer miteinander verbindet. Hierdurch wird der Aufbau der erfindungsgemäßen Hydrobuchse noch weiter vereinfacht.

In weiterer Ausgestaltung ist der Tragkörper endseitig zwischen gegenüberliegenden Lagerplatten aufgenommen.

Vorteilhaft ist der Tragkörper am Außenumfang mit einem Mantelring versehen. Zweckmäßig sind im Tragkörper im Bereich der Auflageflächen des Mantelrings Verstärkungsbleche einvulkanisiert. Hierdurch wird eine stabile Einfassung des Tragkörpers durch den Mantelring erzielt.

Vorteilhaft weist der Tragkörper stirnseitig mindestens eine axial abragende, elastische Ringwulst auf.

Bei einer weiteren Ausgestaltung ist vorgesehen, daß an dem Tragkörper zwei weitere diametral gegenüberliegende Trennwände ausgebildet sind derart, daß vier voneinander getrennte Flüssigkeitskammern vorliegen, die über Kanäle miteinander verbunden sind. Hierdurch wird eine Dämpfungswirkung sowohl in axialer als auch in radialer Richtung ermöglicht.

Vorteilhaft sind die Flüssigkeitskammern durch kreuzweise angeordnete Kanäle miteinander verbunden.

Nachfolgend wird die Erfindung anhand von Ausführungsbeispielen näher erläutert, die in schematischer Weise in der Zeichnung dargestellt sind. Dabei zeigen:
- Figur 1: einen Vertikalschnitt durch eine erste Ausführungsform der erfindungsgemäßen Hydrobuchse im unbelasteten Zustand,
- Figur 2: die Hydrobuchse gemäß Figur 1 im belasteten Zustand,
- Figur 3: eine zweite erfindungsgemäße Ausführungsform im unbelasteten Zustand,
- Figur 4: den Schnitt längs der Linie IV-IV gemäß Figur 3, und

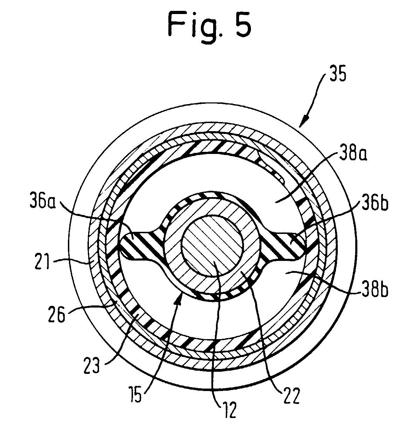

- Figur 5: einen Schnitt längs der Linie V-V gemäß Figur 3.

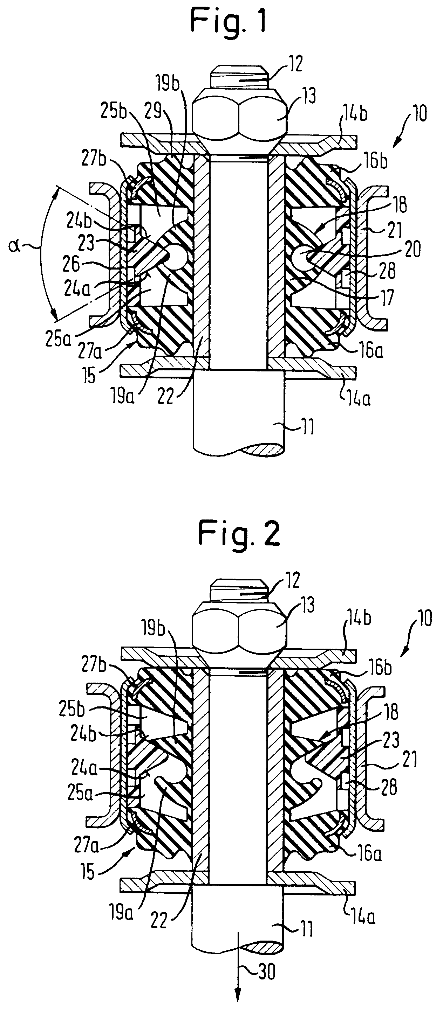

Die in Figur 1 dargestellte Hydrobuchse 10 kommt bei einer Vorderachsaufhängung eines Kraftfahrzeuges zum Einsatz. Die Hydrobuchse 10 dient insbesondere der dämpfenden Festlegung einer Zugstrebe 11 der nicht näher dargestellten Vorderradaufhängung.

Die Hydrobuchse 10 weist eine Innenhülse 22 auf, auf deren Außenumfang ein elastischer Tragkörper 15 aufvulkanisiert ist. Der Tragkörper 15, der aus einem gummielastischen Material besteht, ist rotationssymmetrisch ausgebildet und weist zwei gegenüberliegende Endbereiche 16a, 16b auf. Zwischen den beiden Endbereichen 16a, 16b ist ein Verbindungsbereich 17 vorgesehen, an dem eine Doppellippendichtung 18 ausgebildet ist. Die Doppellippendichtung 18 besitzt zwei radial abragende Dichtlippen 19a, 19b, die voneinander beabstandet sind und eine Aussparung 20 begrenzen. Wie aus Figur 1 hervorgeht, sind die Dichtlippen 19a, 19b näherungsweise klammerförmig angeordnet. In der Aussparung 20 der Doppellippendichtung 18 greift ein stationäres Widerlagerteil 23 ein, das mit Auflageflächen 24a, 24b für die Dichtlippen 19a, 19b ausgebildet ist. Die Auflageflächen 24a, 24b des Widerlagerteils 23 sind zueinander geneigt ausgebildet und schließen einen Winkel α ein. Hierbei kann der Winkel α zwischen 10 bis 80 ° aufweisen. Das rotationssymmetrisch ausgebildete Widerlagerteil 23 besitzt somit näherungsweise einen trapezförmigen Querschnitt. An den Auflageflächen 24a, 24b liegt der Endbereich der Dichtlippen 19a, 19b an.

Die Doppellippendichtung 18 und das stationäre Widerlagerteil 23 trennen zwei mit Hydraulikflüssigkeit gefüllte Flüssigkeitskammern 25a, 25b voneinander. Am Außenumfang werden die Flüssigkeitskammern 25a, 25b von einem zylinderförmigen Mantelring 26 begrenzt, der den elastischen Tragkörper 15 einfaßt. Um eine stabile Festlegung zu gewährleisten, sind im Innern der Endbereiche 16a, 16b des elastischen Tragkörpers 15 Verstärkungsbleche 27a, 27b vorgesehen.

Um einen Flüssigkeitsaustausch zwischen den Flüssigkeitskammern 25a, 25b zu ermöglichen, ist an dem stationären Widerlagerteil 23 ein Überströmkanal 28 eingebracht.

Endseitig ist die Hydrobuchse 10 mit Lagerplatten 14a, 14b versehen, zwischen denen eine zylinderförmige Innenhülse 22 angeordnet ist. An den Innenseiten der Lagerplatten 14a, 14b liegt ein axial abragender elastischer Ringwulst des elastischen Tragkörpers 15 an.

In der dargestellten Einbaulage der Hydrobuchse 10 ist diese mit ihrem Mantelring 26 in eine entsprechende Aufnahme an der Fahrzeugkarosserie 21 eingepreßt. Ein endseitiger Gewindebereich 12 der Zugstrebe 11 wird in der Innenhülse 22 aufgenommen und mittels einer Befestigungsmutter 13 festgelegt.

Nachfolgend soll anhand von Figur 2, die die Hydrobuchse 10 im belasteten Zustand zeigt, deren Funktionsweise näher erläutert werden. Im dargestellten belasteten Zustand wird die Zugstrebe 11 unter Wirkung der Zugbeanspruchung samt der Lagerplatten 14a, 14b bezüglich der Fahrzeugkarosserie 21 in Richtung des Pfeiles 30 versetzt. Hierdurch wird der eleastische Tragkörper 15 einer Verformung unterworfen. Dies führt dazu, daß der Endbereich 16b des elastischen Tragkörpers 15 im wesentlichen vollständig zur Anlage mit der Innenseite der Lagerplatte 14b kommt. Weiterhin führt die Belastung zu einer Relativverschiebung der Doppellippendichtung 18 bezüglich des stationären Widerlagerteils 23. Hierbei gleitet die Dichtlippe 19b an der Auflagefläche 24b und liegt bündig an dieser an. Demgegenüber entfernt sich die Dichtlippe 19a von der zugeordneten Auflagefläche 24a des stationären Widerlagerteils 23.

Durch die Relativverschiebung des elastischen Tragkörpers 15 bezüglich des stationären Widerlagerteils 23 wird der Druck in der Flüssigkeitskammer 25b erhöht, so daß Flüssigkeit von der Flüssigkeitskammer 25b über den Überströmkanal 28 in die Flüssigkeitskammer 25a strömt. Die Druckerhöhung in der Flüssigkeitskammer 25b wird noch dadurch gesteigert, daß die an der Auflagefläche 25b geführte Dichtlippe 19b zu einer weiteren Verringerung des Volumens der Flüssigkeitskammer 25b führt.

Demgegenüber entfernt sich die Dichtlippe 19a von der zugeordneten Auflagefläche 24a des stationären Widerlagerteils 23.

Da die Trennwand zwischen den beiden Flüssigkeitskammern 25a, 25b mit einem stationären Widerlagerteil 23 und der Doppellippendichtung 18 ausgeführt ist, ist auch ein radialer Freiweg möglich, ohne daß die Dämpfungswirkung der Hydrobuchse 10 beeinträchtigt wird. Insbesondere treten bei radialer Belastung keine Zugbeanspruchungen an der Doppellippendichtung 18 auf, wodurch deren Lebensdauer (Standzeit) erhöht wird. Die Hydrobuchse 10 besitzt einen einfachen Aufbau und kann somit kostengünstig hergestellt werden.

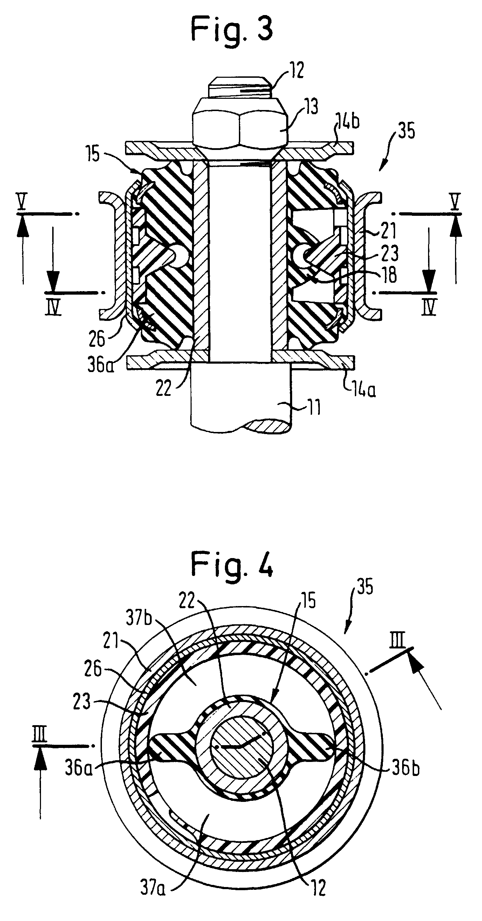

Die in Figur 3 dargestellte Hydrobuchse 35 besitzt prinzipiell einen ähnlichen Aufbau wie die Hydrobuchse 10 gemäß Figur 1. Zur Beschreibung der Hydrobuchse 35 sollen deshalb für gleiche oder funktionsgleiche Teile die in Figur 1 eingeführten Bezugszeichen verwendet werden. Die Hydrobuchse 35 unterscheidet sich von der Hydrobuchse 10 gemäß Figur 1 lediglich dadurch, daß der elastische Tragkörper 15 mit zwei diametral gegenüberliegenden, in Radialrichtung verlaufenden Trennwänden 36a, 36b ausgebildet ist. Hierdurch entsteht eine Hydrobuchse mit vier Flüssigkeitskammern 37a, 37b, 38a, 38b. Hierbei sind die Flüssigkeitskammern 37a, 37b, 38a, 38b mit einem nicht näher dargestellten Kanalsystem verbunden. Günstigerweise wird eine kreuzweise Verbindung der Flüssigkeitskammern 37b und 38a bzw. 37a und 38b vorgesehen. Die Hydrobuchse 35 kann somit eine Dämpfungswirkung sowohl in axialer als auch in radialer Richtung ermöglichen. In beiden Fällen kommt es zu einem Flüssigkeitsaustausch zwischen den über die Kanäle verbundenen Flüssigkeitskammern. Auch die Hydrobuchse 35 ist in einfacher Weise herstellbar, da die Trennwände 36a, 36b an den elastischen Tragkörper 15 angeformt sind und somit ein einstückiges Vulkanisationsteil vorliegt.

## Patentansprüche

1. Axial dämpfende Hydrobuchse, insbesondere für die Fahrwerksaufhängung bei Kraftfahrzeugen, in der ein elastischer Tragkörper (15) mit einer in Axialrichtung verlaufenden Zentralbohrung zur Aufnahme einer Tragstrebe (11) vorgesehen ist und in der am Tragkörper (15) mindestens zwei mit Hydraulikflüssigkeit gefüllte Flüssigkeitskammern (25a, 25b; 37a, 37b, 38a, 38b), die belastungsabhängig ihr Volumen verändern und über einen Überströmkanal (28) miteinander verbunden sind, vorgesehen sind, dadurch gekennzeichnet, daß die Flüssigkeitskammern (25a, 25b; 37a, 37b, 38a, 38b) durch eine am Tragkörper (15) ausgebildete Doppellippendichtung (18), die an einem stationären Widerlagerteil (23) anliegt, voneinander getrennt sind.

2. Hydrobuchse nach Anspruch 1, dadurch gekennzeichnet, daß die Doppellippendichtung (18) zwei radial abragende, beabstandete Dichtlippen (19a, 19b) aufweist, die an zugeordneten Auflageflächen (24a, 24b) des Widerlagerteils (23) aufliegen.

3. Hydrobuchse nach Anspruch 1 oder 2, dadurch gekennzeichnet, daß das Widerlagerteil (23) zueinander geneigte Auflageflächen (24a, 24b) für die Doppellippendichtung (18) aufweist.

4. Hydrobuchse nach Anspruch 3, dadurch gekennzeichnet, daß das Widerlagerteil (23) einen näherungsweise trapezförmigen Querschnitt besitzt.

5. Hydrobuchse nach Anspruch 3 oder 4, dadurch gekennzeichnet, daß der zwischen den gegenüberliegenden Auflageflächen (24a, 24b) vorliegende Winkel (α) zwischen 10 ° bis 80 ° liegt.

6. Hydrobuchse nach einem der Ansprüche 1 bis 5, dadurch gekennzeichnet, daß an dem Widerlagerteil (23) der Überströmkanal (28) eingebracht ist, der die Flüssigkeitskammer (25a, 25b; 37a, 37b, 38a, 38b) miteinander verbindet.

7. Hydrobuchse nach einem der Ansprüche 1 bis 6, dadurch gekennzeichnet, daß der Tragkörper (15) endseitig zwischen gegenüberliegenden Lagerplatten (14a, 14b) aufgenommen ist.

8. Hydrobuchse nach einem der Ansprüche 1 bis 7, dadurchgekennzeichnet, daß der Tragkörper (15) am Außenumfang mit einem Mantelring (26) versehen ist.

9. Hydrobuchse nach Anspruch 8, dadurch gekennzeichnet, daß im Tragkörper (15) im Bereich der Auflageflächen des Mantelrings (26) Verstärkungsbleche (27a, 27b) einvulkanisiert sind.

10. Hydrobuchse nach einem der Ansprüche 1 bis 9, dadurch gekennzeichnet, daß der Tragkörper (15) strinseitig mindestens eine axial abragende elastische Ringwulst (29) aufweist.

11. Hydrobuchse nach einem der Ansprüche 1 bis 10, dadurch gekennzeichnet, daß an dem Tragkörper (15) zwei weitere diametral gegenüberliegende Trennwände (36a, 36b) ausgebildet sind derart, daß vier voneinander getrennte Flüssigkeistkammern (37a, 37b, 38a, 38b) vorliegen, die über Kanäle (28) miteinander verbunden sind.

12. Hydrobuchse nach Anspruch 11, dadurch gekennzeichnet, daß die Flüssigkeitskammern (37a, 37b, 38a, 38b) durch kreuzweise angeordnete Kanäle miteinander verbunden sind.

## Claims

1. An axially damping hydro bush, more particularly for automotive chassis suspension applications, provided with a resilient supporting member (15) including an axial centerbore for accommodating a supporting strut (11) and provided with at least two fluid chambers (25a, 25b; 37a, 37b, 38a, 38b) filled with hydraulic fluid in said supporting member (15) which change their volume as a function of the load and are connected to each other via an overflow passage (28), characterized in that said fluid chambers (25a, 25b; 37a, 37b, 38a, 38b) are separated from each other by a double-lip seal (18) configured on said supporting member (15) and in contact with a stationary abutment part (23).

2. The hydro bush as set forth in claim 1, characterized in that said double-lip seal (18) comprises two sealing lips (19a, 19b) protruding radial spaced away from each other engaging associated contact surfaces (24a, 24b) of said abutment part (23).

3. The hydro bush as set forth in claim 1 or 2, characterized in that said abutment part (23) comprises contact surfaces (24a, 24b) inclined towards each other for said double-lip seal (18).

4. The hydro bush as set forth in claim 3, characterized in that said abutment part (23) is approximately trapezoidal in cross-section.

5. The hydro bush as set forth in claim 3 or 4, characterized in that the angle (a) existing between said opposing contact surfaces (24a, 24b) is in the range 10° to 80°.

6. The hydro bush as set forth in any of the claims 1 to 5, characterized in that said overflow passage (28) connecting said fluid chambers (25a, 25b; 37a, 37b, 38a, 38b) to each other is incorporated on said abutment part (23).

7. The hydro bush as set forth in any of the claims 1 to 6, characterized in that said supporting member (15) is accommodated endwise between opposing mounting plates (14a, 14b).

8. The hydro bush as set forth in any of the claims 1 to 7, characterized in that said supporting member (15) is provided at the outer circumference with a shrouding ring (26).

9. The hydro bush as set forth in claim 8, characterized in that reinforcement plates (27a, 27b) are vulcanized in place in said supporting member (15) in the region of the contact surfaces of said shrouding ring (26).

10. The hydro bush as set forth in any of the claims 1 to 9, characterized in that said supporting member (15) comprises at the face end at least one axially protruding resilient ring bead (29).

11. The hydro bush as set forth in any of the claims 1 to 10, characterized in that two further diametrally opposed partitions (36a, 36b) are configured on said supporting member (15) such that four fluid chambers (37a, 37b, 38a, 38b) exist separate from each other, interconnected via passages (28).

12. The hydro bush as set forth in claim 11, characterized in that said fluid chambers (37a, 37b, 38a, 38b) are interconnected by an intersecting arrangement of passages.

## Revendications

1. Manchon hydraulique à amortissement axial, en particulier pour la suspension du train de roulement dans des véhicules automobiles, dans lequel est prévu un corps de support élastique (15) qui présente un perçage central s'étendant en direction axiale pour recevoir une traverse de support (11), et dans lequel sont prévues sur le corps de support (15) au moins deux chambres à liquide (25a, 25b ; 37a, 37b, 38a, 38b) remplies avec un liquide hydraulique qui modifient leur volume en fonction de la charge et qui sont reliées l'une à l'autre via un canal de déversement (28), caractérisé en ce que les chambres à liquide (25a, 25b ; 37a, 37b, 38a, 38b) sont séparées les unes des autres par un joint à lèvre double (18) réalisé sur le corps de support (15) et reposant sur une contrebutée stationnaire (23).

2. Manchon hydraulique selon la revendication 1, caractérisé en ce que le joint à lèvre double (18) comporte deux lèvres d'étanchement (19a, 19b) écartées et dépassant radialement, qui s'appliquent contre des surfaces d'appui associées (24a, 24b) de la contrebutée (23).

3. Manchon hydraulique selon l'une ou l'autre des revendications 1 et 2, caractérisé en ce que la contrebutée (23) présente des surfaces d'appui (24a, 24b) inclinées l'une par rapport à l'autre pour le joint à lèvre double (18).

4. Manchon hydraulique selon la revendication 3, caractérisé en ce que la contrebutée (23) présente une section approximativement trapézoïdale.

5. Manchon hydraulique selon l'une ou l'autre des revendications 3 et 4, caractérisé en ce que l'angle (α) existant entre les surfaces d'appui en vis-à-vis (24a, 24b) est de l'ordre de 10° à 80°.

6. Manchon hydraulique selon l'une quelconque des revendications 1 à 5, caractérisé en ce que sur la contrebutée (23) est ménagé le canal de déversement (28) qui relie les chambres à liquide (25a, 25b ; 37a, 37b, 38a, 38b).

7. Manchon hydraulique selon l'une quelconque des revendications 1 à 6, caractérisé en ce que le corps de support (15) est logé du côté extrémité entre des plaques de montage (14a, 14b) en vis-à-vis l'une de l'autre.

8. Manchon hydraulique selon l'une quelconque des revendications 1 à7, caractérisé en ce que le corps de support (15) est pourvu à la périphérie extérieure d'une bague enveloppe (26).

9. Manchon hydraulique selon la revendication 8, caractérisé en ce que des tôles de renforcement (27a, 27b) sont vulcanisées dans le corps de support (15) au niveau des surfaces d'appui de la bague enveloppe (26).

10. Manchon hydraulique selon l'une quelconque des revendications 1 à 9, caractérisé en ce que le corps de support (15) présente du côté frontal au moins un bourrelet annulaire élastique (29) dépassant axialement.

11. Manchon hydraulique selon l'une quelconque des revendications 1 à 10, caractérisé en ce que deux autres parois de séparation (36a, 36b) diamétralement en vis-à-vis l'une de l'autre sont réalisées sur le corps de support (15), de telle sorte qu'il existe quatre chambres à liquide (37a, 37b, 38a, 38b) séparées les unes des autres qui sont reliées les unes aux autres via des canaux (28).

12. Manchon hydraulique selon la revendication 11, caractérisé en ce que les chambres à liquide (37a, 37b, 38a, 38b) sont reliées les unes aux autres par des canaux ménagés en croix.
